# DEMANDE DE BREVET EUROPEEN

(11) **EP 3 690 747 A1**
(43) Date de publication de la demande: **05.08.2020**
(21) Numéro de dépôt: 20155430.0
(22) Date de dépôt: 04.02.2020
(51) Int. Cl.: G06K 17/00, H04W 4/80

(54) **SYSTÈME D'ÉTIQUETTES ÉLECTRONIQUES**

(30) Priorité: 04.02.2019 FR 1901077
(71) Demandeur: E-Script, 69390 Millery (FR)
(72) Inventeur: BRUMPT-FROISSARD, Didier, 69390 MILLERY (FR)
(74) Mandataire: Bouvier, Thibault

(57) **Abrégé**

L'invention concerne un procédé d'affichage individualisé pour occupants d'un bâtiment d'habitation (10), comprenant des étapes consistant à :
- disposer un ensemble d'au moins un support (40) pour plaque individualisable (50) sur un ensemble d'au moins un emplacement individuel du bâtiment d'habitation (10),
caractérisé en ce que le procédé comprend en outre des étapes consistant à :
- fournir un ensemble d'au moins une plaque individualisable (50), chaque plaque individualisable (50) comprenant du papier électronique (51) et un circuit électronique (52), ledit circuit électronique (52) étant connecté électriquement audit papier électronique (51) et comprenant une batterie (53), une antenne (54), un module de communication sans fil (55), et une mémoire (56) comprenant un identifiant individuel,
- disposer, à portée de communication sans fil dudit ensemble d'au moins une plaque individualisable (50), un modem (60) configuré pour communiquer sans fil avec ledit ensemble d'au moins une plaque individualisable (50) et configuré pour communiquer avec ou sans fil avec un serveur distant (70), et
- solidariser au moins une plaque individualisable (50) dudit ensemble avec un support (40) pour plaque individualisable (50) correspondant..

## Description

1. La présente invention concerne le domaine de l'affichage individualisé pour la signalétique interne d'un bâtiment d'habitation.
2. Un bâtiment d'habitation au sens de la présente invention peut être destiné à l'habitat individuel, par exemple un bien d'habitation tel qu'une maison individuelle ; ou destiné à l'habitat collectif, par exemple un immeuble d'habitation comprenant une pluralité de biens d'habitation tels que des appartements individuels, et éventuellement une pluralités de biens individuels annexes, notamment tels que des greniers, des caves et des places de parking, éventuellement sous forme de box ; les biens individuels étant destinés à l'habitation ou à usage professionnel par exemple pour des professions libérales.
3. A ce titre, la présente invention permet notamment l'identification patronymique des occupants ou des propriétaires d'un bâtiment d'habitation, ou des biens individuels annexes d'un bâtiment d'habitation, ce qui est utile par exemple pour la distribution du courrier postal.
4. Un bâtiment d'habitation au sens de la présente invention peut également être un hôtel comprenant une pluralité de chambres, appartements ou suites individuelles.
5. A ce titre, la présente invention permet notamment l'identification patronymique des occupants ou l'identification du numéro de chambre / appartement.
6. Par concision, il ne sera développé ici que le cas d'un bâtiment d'habitation. L'homme du métier transposera aisément aux hôtels.
7. La propriété d'un bien d'habitation est identifiée au cadastre par un ensemble d'au moins un lot. Les propriétaires des lots sont identifiés par contrat de vente mais ne sont pas nécessairement toujours les occupants et les contrats de vente ainsi que les parties au contrat ne sont pas des données publiques.
8. En outre, les occupants d'un bien d'habitation peuvent ne pas en être les propriétaires, typiquement dans le cas d'un bien locatif.
9. De même, une pluralité d'occupants peut occuper un même bâtiment d'habitation ou un même bien d'habitation, par exemple en copropriété ou en colocation.
10. Il n'est donc pas aisé de connaître l'identité de l'occupant réel ou des occupants réels d'un bien d'habitation, ce qui rend la tâche de distribution de courrier postal potentiellement délicat.
11. Dans la suite de la présente description, par souci de concision, on entendra par « occupant » un ou plusieurs occupants d'un même bien d'habitation.
12. Classiquement, l'occupant d'un bien d'habitation est identifié par un étiquetage de son nom patronymique sur une boite aux lettres individuelle, disposée dans ou à proximité du bâtiment d'habitation.
13. L'étiquetage, c'est à dire l'inscription du nom patronymique sur un support peut être réalisé par impression sur un papier dont la qualité peut varier d'un bâtiment d'habitation à un autre, ou encore par gravure d'une plaque, par exemple pour conserver une harmonie visuelle qui respecte une charte graphique locale applicable au bâtiment d'habitation.
14. Le problème est qu'il existe un délai plus ou moins long de la mise à jour de l'étiquetage de la boite aux lettres d'un occupant avec son nom patronymique.
15. Ainsi une boite aux lettres donnée peut comprendre un étiquetage dont le nom patronymique ne correspond pas, au moins temporairement, au nom patronymique de son occupant actuel.
16. Ce qui implique des problèmes potentiels de distribution de courrier, et des frais de mise à jour de la plaque.
17. En outre, l'utilisation d'étiquettes provisoires n'est pas satisfaisante ne serait-ce que pour des questions de cohérence globale ou de normes locales au sein du bâtiment d'habitation ou encore d'image de marque du gestionnaire dudit bâtiment d'habitation.
18. La mise à jour des étiquettes est un problème connu, et auquel les régies en charge de l'administration d'immeubles sont régulièrement confrontées.
19. Pour tenter de palier à ce problème, il est connu le document EP3316602 qui vise les dispositifs d'affichage destinés à identifier les occupants d'un bien immobilier.
20. Toutefois selon ce document, il est obligatoire pour un occupant d'activer une commande manuelle sur site, ce qui implique l'obligation pour lui d'être physiquement présent. En outre en cas de pluralité d'occupant, chacun doit activer une commande manuelle respective, ce qui n'est pas satisfaisant.
21. La présente invention permet de remédier à ces inconvénients.
22. Selon un premier de ses objets, l'invention concerne un procédé de modification d'un affichage individualisé pour un ensemble d'au moins un occupant d'un bâtiment d'habitation (10), le bâtiment d'habitation (10) comprenant un ensemble d'au moins une boite aux lettres (20) individuelle et un ensemble d'au moins une porte d'entrée(30), le procédé comprenant des étapes consistant à :
   - disposer un ensemble d'au moins un support (40) pour plaque individualisable (50) sur un ensemble d'au moins un emplacement individuel du bâtiment d'habitation (10).
23. il est essentiellement caractérisé en ce que le procédé comprend en outre des étapes consistant à :
   - fournir un ensemble d'au moins une plaque individualisable (50), chaque plaque individualisable (50) comprenant du papier électronique (51) et un circuit électronique (52), ledit circuit électronique (52) étant connecté électriquement audit papier électronique (51) et comprenant une batterie (53), une antenne (54), un module de communication sans fil (55), et une mémoire (56) comprenant un identifiant individuel,
   - disposer, à portée de communication sans fil dudit ensemble d'au moins une plaque individualisable (50), un modem (60) configuré pour communiquer sans fil avec ledit ensemble d'au moins une plaque individualisable (50) et configuré pour communiquer avec ou sans fil avec un serveur distant (70),
   - solidariser au moins une plaque individualisable (50) dudit ensemble avec un support (40) pour plaque individualisable (50) correspondant, et
   - générer un ensemble d'au moins une instruction de modification d'affichage (80) depuis le serveur distant (70),
   - envoyer ledit ensemble d'au moins une instruction de modification d'affichage (80) depuis le serveur distant (70) audit modem (60), ledit ensemble d'au moins une instruction de modification d'affichage (80) comprenant l'identifiant individuel et le contenu à afficher de chaque plaque individualisable (50) dont l'affichage est à modifier,
   - retransmettre ledit ensemble d'au moins une instruction de modification d'affichage (80) par le modem (60) à l'ensemble d'au moins une plaque individualisable (50), et
   - pour chaque plaque individualisable (50) dont l'identifiant individuel est compris dans ledit ensemble d'au moins une instruction de modification d'affichage (80),
      - modifier le contenu de l'affichage du papier électronique (51) correspondant, et
      - enregistrer ledit contenu modifié dans la mémoire (56) de ladite plaque individualisable (50).
24. On peut prévoir que l'étape consistant à générer un ensemble d'au moins une instruction de modification d'affichage (80) comprend l'encodage d'au moins l'une des informations parmi :
   - un identifiant alphanumérique correspondant à au moins l'un parmi : un occupant, un numéro de lot, un numéro d'appartement, un numéro de chambre, et
   - le patronyme d'un occupant.
25. On peut prévoir que l'étape consistant à disposer un ensemble d'au moins un support (40) de plaque individualisable (50) sur un ensemble d'au moins un emplacement respectif du bâtiment d'habitation (10) comprend au moins l'une des étapes parmi :
   - disposer un ensemble d'au moins un support (40) de plaque individualisable (50) sur un ensemble d'au moins une boite aux lettres (20) respective ;
   - disposer un ensemble d'au moins un support (40) de plaque individualisable (50) sur un ensemble d'au moins une porte d'entrée respective ;
   - disposer un ensemble d'au moins une plaque individualisable (50) sous forme de tableau d'affichage dans un lieu accessible à l'ensemble des occupants du bâtiment d'habitation (10).
26. On peut prévoir en outre une étape d'activation sélective du circuit électronique (52) de chaque plaque individualisable (50) solidarisée.
27. On peut prévoir que ledit modem (60) est équipé d'au moins une carte de communication GSM, l'étape consistant à envoyer ledit ensemble d'au moins une instruction de modification d'affichage (80) depuis le serveur distant (70) audit modem (60) étant mise en œuvre par téléphonie mobile entre le serveur distant (70) et ladite carte de communication GSM.
28. Selon un autre de ses objets, l'invention concerne un système pour la gestion de l'identification des occupants d'un bâtiment d'habitation (10), susceptible de mettre en œuvre le procédé selon l'invention, le bâtiment d'habitation (10) comprenant un ensemble d'au moins une boite aux lettres (20) et d'au moins une porte d'entrée, le système comprenant :
   - un ensemble d'au moins un support (40) pour plaque individualisable (50), disposé sur un ensemble d'au moins un emplacement respectif du bâtiment d'habitation (10).
29. Il est essentiellement caractérisé en ce qu'il comprend en outre :
   - un ensemble d'au moins une plaque individualisable (50), solidaire d'au moins un support (40) pour plaque individualisable (50) respectif, la plaque individualisable (50) comprenant du papier électronique (51),
   - un modem (60), disposé à portée de communication dudit ensemble d'au moins une plaque individualisable (50), et configuré pour communiquer sans fil avec ledit ensemble d'au moins une plaque individualisable (50) et avec un serveur distant (70) de manière filaire ou sans fil,
      et pour au moins une plaque individualisable (50) dudit ensemble,
   - un circuit électronique (52) comprenant une batterie (53), une antenne (54), un module de communication sans fil (55) et une mémoire (56) comprenant un identifiant individuel, ledit circuit électronique (52) étant connecté électriquement avec ledit papier électronique (51).
30. On peut prévoir une table de correspondance enregistrée dans une mémoire (56) accessible audit serveur distant (70), et comprenant :
   - une correspondance entre un identifiant individuel de plaque individualisable (50) et au moins l'une des informations parmi :
      - un identifiant alphanumérique correspondant à un occupant, et
      - le patronyme d'un occupant.
31. On peut prévoir que
   - le serveur distant (70) est configuré pour pouvoir envoyer vers le modem (60) une instruction de modification d'affichage (80) comprenant un contenu informatif modifié extrait de ladite table de correspondance ;
   - le modem (60) est configuré pour renvoyer vers l'ensemble de plaques individualisables ladite instruction de modification d'affichage (80) ; et
   - chaque plaque individualisable (50) est configurée pour modifier le contenu de l'affichage du papier électronique (51) correspondant et afficher au moins l'une des informations parmi :
      - un identifiant alphanumérique correspondant à un occupant, et
      - le patronyme d'un occupant
      lorsque l'identifiant individuel de ladite plaque est compris dans ladite instruction de modification d'affichage (80).
32. On peut prévoir que :
   - un ensemble d'au moins un support pour plaque individualisable (50) est disposé sur un ensemble d'au moins une boite aux lettres (20) respective ; et/ou
   - un ensemble d'au moins un support pour plaque individualisable (50) est disposé sur un ensemble d'au moins une porte d'entrée respective ; et/ou
   - un ensemble d'au moins une plaque individualisable (50) est disposé sous forme de tableau d'affichage dans un lieu accessible à l'ensemble des occupants du bâtiment d'habitation (10).
33. On peut prévoir que chaque plaque individualisable (50) comprend des moyens d'activation sélective de son circuit électronique (52).
34. **Les dessins annexés illustrent l'invention :**

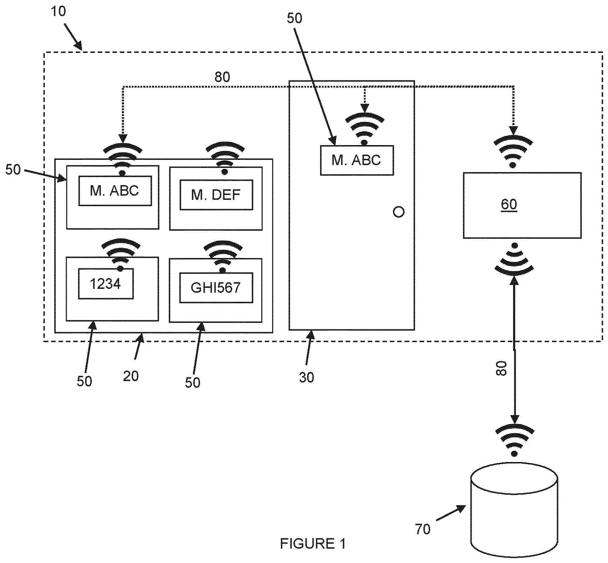

35. [Fig.1] représente un mode de réalisation d'un système selon l'invention.

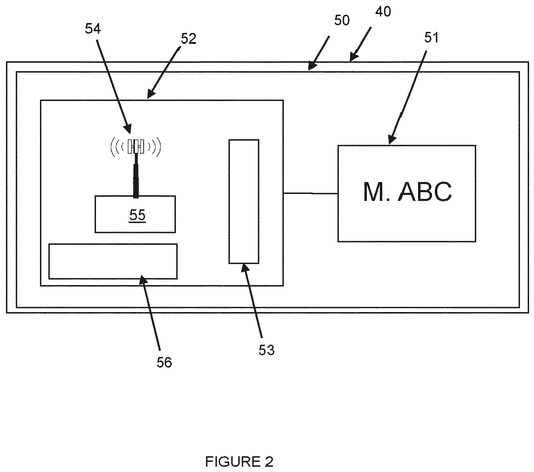

36. [Fig.2] représente un mode de réalisation d'une plaque individualisable selon l'invention.
37. La présente invention est basée sur l'utilisation de papier électronique 51, également appelé encre électronique, papier à encre électronique, e-papier, ou encore encre électrophorétique encapsulée, et dont le domaine englobe également l'électrofluidique et l'électrochromisme.
38. Le papier électronique 51 est un afficheur réinscriptible. C'est une technique d'affichage purement réflective sur support souple tel que par exemple du papier ou du plastique. Le contenu informatif affiché est modifiable électroniquement et ne nécessite pas d'énergie pour l'affichage mais consomme de l'énergie uniquement lorsque le contenu affiché est modifié puis reste inerte.
39. Un papier électronique 51 comprend une couche de polymère liquide comprenant des capsules d'encre électronique entre une couche électrode en surface transparente, pour permettre l'affichage, et une électrode de fond ; chaque couche comprenant une pluralité d'électrodes.
40. Un papier électronique 51 comprend également une couche d'adressage électronique qui permet de commander la couche active d'électrodes en commandant de manière individuelle chaque pixel.
41. Une capsule d'encre électronique est une microcapsule qui contient des particules blanches chargées respectivement positivement ou négativement et des particules noires chargées respectivement négativement ou positivement.
42. Lorsque l'on applique un champ électrique aux électrodes, les particules blanches se placent sur une extrémité de la capsule et les noires sur l'autre ; les particules d'une capsule donnée migrent aux électrodes en fonction de leur charge respective et du champ qui leur appliqué.
43. En plaçant des millions de ces capsules sur une surface et en les commandant par des champs électriques, on peut générer une image en noir et blanc.
44. Par adjonction d'une matrice de filtres on peut également obtenir un affichage en couleur.
45. En fonction du nombre de champs électriques pour chaque micro capsule, il est également possible d'obtenir plusieurs niveaux de gris.
46. L'affichage est piloté via la couche d'adressage.
47. Le temps de réponse, qui est de l'ordre de la centaine de millisecondes, est suffisant pour l'application envisagée ici.
48. Un papier électronique 51 est bistable, c'est à dire que les particules restent dans leur état de mise sous tension des électrodes après l'arrêt de la mise sous tension.
49. Un papier électronique 51 est donc particulièrement peu gourmand en énergie électrique.
50. Sur cette base, on prévoit de fournir un ensemble de plaques individualisables.
51. Chaque plaque individualisable 50 comprend du papier électronique 51 et un circuit électronique 52, connecté électriquement audit papier électronique 51.
52. Chaque circuit électronique 52 comprend une batterie 53, de préférence amovible, qui permet l'alimentation électrique dudit circuit électronique 52.
53. Chaque circuit électronique 52 comprend également un module de communication sans fil 55 et une antenne 54 reliée électriquement audit module, pour permettre la communication sans fil avec un modem 60 décrit ultérieurement.
54. Chaque circuit électronique 52 comprend une mémoire 56, dans laquelle est stocké un identifiant individuel permettant d'identifier ledit circuit électronique 52, c'est à dire d'identifier ladite plaque individualisable 50.
55. Chaque circuit électronique 52 comprend également une mémoire 56 (une autre zone de ladite mémoire 56 ou une autre mémoire) comprenant le contenu à afficher sur le papier électronique 51 de la plaque individualisable 50 correspondante ; l'affichage dudit contenu étant piloté par le circuit électronique 52.
56. On prévoit également de fournir un ensemble de supports 40 pour plaque individualisable 50.
57. On prévoit ensuite de solidariser chaque plaque individualisable 50 avec un support 40 de plaque individualisable 50 respectif. La solidarisation peut être mise en œuvre par tout moyen de connu, par exemple par clipsage, vissage, rivetage ou par collage.
58. Dans la suite de la présente description, on entend par « plaque individualisable 50 », une plaque individualisable 50 solidaire d'un support 40 de plaque individualisable 50.
59. L'ensemble de plaques individualisables sont destinées à la signalétique individuelle au sein d'un bâtiment d'habitation, notamment pour identifier l'accès à un bien d'habitation, typiquement la porte d'entrée 30 dans un bien d'habitation individuel ; ou à une extension de celui-ci, typiquement la porte d'une boite aux lettres 20 individuelle.
60. Par souci de concision, on ne considérera ici que le cas d'un bâtiment d'habitation 10 sous forme d'immeuble comprenant une pluralité de biens d'habitation individuels, chaque bien d'habitation individuel étant occupé ou possédé par un occupant respectif.
61. Le cas d'un bâtiment d'habitation sous forme d'hôtel ou de bâtiment d'habitation professionnel est similaire.
62. Le cas d'un bâtiment d'habitation 10 sous forme de maison individuelle est plus simple et n'a pas besoin d'être décrit.
63. Aussi l'expression « bâtiment d'habitation » ci-après englobe les bâtiments d'habitation, les hôtels et bâtiments d'habitation mixtes, c'est à dire comprenant des biens à usage d'habitation et des biens à usage professionnels.
64. Un bâtiment d'habitation 10 comprend généralement une pluralité de biens d'habitations, typiquement des appartements ; un ensemble de boites aux lettres et un ensemble de portes d'entrée individuelle ; chaque boite aux lettres individuelle 20 correspondant à un bien d'habitation individuel. Une porte d'entrée 30 peut être une porte d'entrée individuelle permettant l'accès à un bien d'habitation individuel. Une porte d'entrée 30 peut également être une porte palière, une porte de cave individuelle, une porte de grenier individuel, ou une porte d'entrée générale permettant l'accès audit bâtiment d'habitation 10.
65. On prévoit de disposer un ensemble de plaques individualisables sur un ensemble d'au moins un emplacement respectif du bâtiment d'habitation 10.
66. Par exemple, on prévoit de disposer une plaque individualisable 50 par porte d'entrée 30 individuelle, une plaque individualisable 50 par boite aux lettres 20, et/ou un ensemble de plaques individualisables à la porte d'entrée générale du bâtiment d'habitation 10.
67. Une plaque individualisable 50 peut être disposée sur une porte d'entrée 30 ou à proximité de celle-ci, sur le même mur ou sur un mur adjacent, à une distance inférieure à une valeur seuil, en général inférieure à 2m.
68. Une plaque individualisable 50 peut également être disposée sur un interphone à plaques (non équipé de défilement électronique) ou sur le tableau des occupants du bâtiment d'habitation 10.
69. On prévoit également de disposer un modem 60 dans le bâtiment d'habitation 10.
70. Le modem 60 est équipé d'au moins une carte de communication GSM, De préférence, la carte de communication GSM est multi-opérateurs.
71. Le modem 60 est disposé à portée de communication sans fil avec l'ensemble de plaques individualisables 50 de sorte à pouvoir communiquer sans fil avec ledit ensemble de plaques individualisables, directement ou par l'intermédiaire d'un relais (non illustré).
72. Le modem 60 est également configuré pour communiquer sans fil avec un serveur distant 70.
73. On peut prévoir une étape d'initialisation dans laquelle une ou plusieurs plaques individualisables 50 sont individualisées préalablement à leur disposition dans le bâtiment d'habitation 10, à l'instar des plaques préimprimées ou gravées de l'art antérieur.
74. Alternativement ou ultérieurement, lorsqu'une plaque individualisable 50 doit être individualisée ou lorsqu'une plaque individualisée doit être mise à jour, on prévoit une étape de mise à jour qui consiste en substance à modifier l'affichage du papier électronique 51 de la plaque individualisable 50 par une commande, en l'espèce une instruction de modification d'affichage 80, envoyée depuis le serveur distant 70.
75. Dans ce contexte, par concision, on entend indistinctement plaque individualisable 50 et plaque individualisée.
76. On prévoit alors de générer une instruction de modification d'affichage 80 depuis le serveur distant 70. Dans le cas où plusieurs plaques individualisables 50 sont à mettre à jour, on peut prévoir soit une instruction de modification d'affichage 80 unique pour l'ensemble des plaques individualisables, soit une instruction de modification d'affichage 80 par plaque individualisable 50. Par concision, on entend ici par « instruction de modification d'affichage 80 » une ou plusieurs instructions.
77. L'instruction de modification d'affichage 80 est générée grâce à un logiciel spécifique chargé sur le serveur distant 70.
78. Typiquement, le serveur distant 70 comprend, en l'espèce sous forme de bases de données, une correspondance entre l'identifiant individuel de chaque plaque plaque individualisable 50 et au moins l'un parmi :
   - un identifiant alphanumérique correspondant à un occupant, et
   - le patronyme d'un occupant.
79. Par exemple, l'identifiant alphanumérique est le numéro de bâtiment d'habitation, le numéro de lot, l'étage, la cage d'escalier, etc. correspondant à un occupant donné.
80. L'instruction de modification d'affichage 80 est alors envoyée depuis le serveur distant 70 vers le modem 60, par exemple suite au changement d'occupant d'un bien d'habitation donné.
81. L'instruction de modification d'affichage 80 comprend l'identifiant individuel et le contenu à afficher de chaque plaque individualisable 50 dont l'affichage est à modifier.
82. A réception par le modem 60, l'instruction de modification d'affichage 80 est retransmise par celui-ci par voie sans-fil à l'ensemble de plaques individualisables du bâtiment d'habitation 10.
83. A réception de l'instruction de modification d'affichage 80 par l'ensemble de plaques individualisables du bâtiment d'habitation 10, chaque plaque individualisable 50 dont l'identifiant individuel est compris dans ladite instruction de modification d'affichage 80 modifie le contenu de l'affichage du papier électronique 51 correspondant, et enregistre ledit contenu modifié dans sa mémoire 56 correspondante.
84. La présente invention permet ainsi la mise à jour, en temps réel, notamment de l'identification patronymique des occupants d'un immeuble au niveau des blocs de boîtes aux lettres, et ce quel que soit le fabricant de boîtier de boîtes aux lettres 20 et quel que soit le fabricant ou le modèle du bloc de boîte aux lettres 20.
85. Avantageusement, on prévoit une activation sélective du circuit électronique 52 de chaque plaque individualisable 50, de préférence de manière récurrente, par exemple une fois par jour, ou une fois par semaine.
86. Grâce à cette configuration, l'énergie électrique de la pile de chaque plaque individualisable 50 est économisée.
87. Par plaque individualisable 50, on entend également un tableau d'affichage.
88. De préférence, le tableau d'affichage est affiché dans un lieu collectif, accessible à l'ensemble des occupants d'un bâtiment d'habitation 10 typiquement dans l'entrée dudit bâtiment d'habitation 10.
89. Grâce à la présente invention, il est ainsi possible de mettre à jour à distance et sans fil des informations relatives par exemple à la gestion d'un bâtiment d'habitation 10, notamment des notes d'information, des dates d'entretien, etc.
90. La présente invention permet un système autonome, adaptable et connecté d'un ensemble de plaques patronymiques, avec une mise à jour en temps réel et à distance du contenu de l'affichage de celles-ci.
91. Avantageusement, la présente invention permet une communication sans fil de bout en bout. Grâce à cette caractéristique, la position de chaque plaque individualisable 50 importe peu tant qu'elle est à portée de communication sans fil du modem 60, ce qui ne serait pas le cas si les plaques individualisables 50 communiquaient avec le modem 60 par voie filaire.
92. De même la position du modem 60 dans le bâtiment d'habitation 10 importe peu tant qu'il est à portée de communication mobile avec le serveur distant 70, ce qui permet par exemple de placer le modem 60 dans un endroit sécurisé très facilement.
93. Enfin, selon la présente invention la mise à jour est effectuée de manière centralisée à distance. Il est ainsi aisé, en particulier pour les régies immobilières, de mettre à jour l'étiquetage pour les occupants d'un bâtiment d'habitation 10, y compris avant leur arrivée. En outre un seul et même serveur distant 70 peut être en communication avec un pluralité de modem 60, chaque modem 60 étant disposé dans un bâtiment d'habitation 10 respectif. On peut ainsi mettre à jour des plaques individualisables 50 situées dans différents lieux géographiques à partir d'un seul et même serveur distant 70.
94. Nomenclature
   10 bâtiment d'habitation
   20 boite aux lettres individuelle
   30 porte d'entrée
   40 support pour plaque individualisable
   50 plaque individualisable
      51 papier électronique
      52 circuit électronique
      53 batterie
      54 antenne
      55 module de communication sans fil
      56 mémoire comprenant un identifiant individuel
   60 modem
   70 serveur distant
   80 instruction de modification d'affichage

## Revendications

1. Procédé de modification d'un affichage individualisé pour un ensemble d'au moins un occupant d'un bâtiment d'habitation (10), le bâtiment d'habitation (10) comprenant un ensemble d'au moins une boite aux lettres (20) individuelle et un ensemble d'au moins une porte d'entrée (30), le procédé comprenant des étapes consistant à :
- disposer un ensemble d'au moins un support (40) pour plaque individualisable (50) sur un ensemble d'au moins un emplacement individuel du bâtiment d'habitation (10),
**caractérisé en ce que** le procédé comprend en outre des étapes consistant à :
- fournir un ensemble d'au moins une plaque individualisable (50), chaque plaque individualisable (50) comprenant du papier électronique (51) et un circuit électronique (52), ledit circuit électronique (52) étant connecté électriquement audit papier électronique (51) et comprenant une batterie (53), une antenne (54), un module de communication sans fil (55), et une mémoire (56) comprenant un identifiant individuel,
- disposer, à portée de communication sans fil dudit ensemble d'au moins une plaque individualisable (50), un modem (60) configuré pour communiquer sans fil avec ledit ensemble d'au moins une plaque individualisable (50) et configuré pour communiquer avec ou sans fil avec un serveur distant (70),
- solidariser au moins une plaque individualisable (50) dudit ensemble avec un support (40) pour plaque individualisable (50) correspondant, et
- générer un ensemble d'au moins une instruction de modification d'affichage (80) depuis le serveur distant (70),
- envoyer ledit ensemble d'au moins une instruction de modification d'affichage (80) depuis le serveur distant (70) audit modem (60), ledit ensemble d'au moins une instruction de modification d'affichage (80) comprenant l'identifiant individuel et le contenu à afficher de chaque plaque individualisable (50) dont l'affichage est à modifier,
- retransmettre ledit ensemble d'au moins une instruction de modification d'affichage (80) par le modem (60) à l'ensemble d'au moins une plaque individualisable (50), et
- pour chaque plaque individualisable (50) dont l'identifiant individuel est compris dans ledit ensemble d'au moins une instruction de modification d'affichage (80),
- modifier le contenu de l'affichage du papier électronique (51) correspondant, et
- enregistrer ledit contenu modifié dans la mémoire (56) de ladite plaque individualisable (50).

2. Procédé selon la revendication 1, dans lequel l'étape consistant à générer un ensemble d'au moins une instruction de modification d'affichage (80) comprend l'encodage d'au moins l'une des informations parmi :
- un identifiant alphanumérique correspondant à au moins l'un parmi : un occupant, un numéro de lot, un numéro d'appartement, un numéro de chambre, et
- le patronyme d'un occupant.

3. Procédé selon l'une quelconque des revendications précédentes, dans lequel l'étape consistant à disposer un ensemble d'au moins un support (40) de plaque individualisable (50) sur un ensemble d'au moins un emplacement respectif du bâtiment d'habitation (10) comprend au moins l'une des étapes parmi :
- disposer un ensemble d'au moins un support (40) de plaque individualisable (50) sur un ensemble d'au moins une boite aux lettres (20) respective ;
- disposer un ensemble d'au moins un support (40) de plaque individualisable (50) sur un ensemble d'au moins une porte d'entrée respective,
- disposer un ensemble d'au moins une plaque individualisable (50) sous forme de tableau d'affichage dans un lieu accessible à l'ensemble des occupants du bâtiment d'habitation (10).

4. Procédé selon l'une quelconque des revendications précédentes, comprenant en outre une étape d'activation sélective du circuit électronique (52) de chaque plaque individualisable (50) solidarisée.

5. Procédé selon l'une quelconque des revendications précédentes, dans lequel ledit modem (60) est équipé d'au moins une carte de communication GSM, l'étape consistant à envoyer ledit ensemble d'au moins une instruction de modification d'affichage (80) depuis le serveur distant (70) audit modem (60) étant mise en œuvre par téléphonie mobile entre le serveur distant (70) et ladite carte de communication GSM.

6. Système pour la gestion de l'identification des occupants d'un bâtiment d'habitation (10), susceptible de mettre en œuvre le procédé selon l'une quelconque des revendications précédentes, le bâtiment d'habitation (10) comprenant un ensemble d'au moins une boite aux lettres (20) et d'au moins une porte d'entrée, le système comprenant :
- un ensemble d'au moins un support (40) pour plaque individualisable (50), disposé sur un ensemble d'au moins un emplacement respectif du bâtiment d'habitation (10), **caractérisé en ce qu'**il comprend en outre :
- un serveur distant (70),
- un ensemble d'au moins une plaque individualisable (50), solidaire d'au moins un support (40) pour plaque individualisable (50) respectif, la plaque individualisable (50) comprenant du papier électronique (51),
- un modem (60), disposé à portée de communication dudit ensemble d'au moins une plaque individualisable (50), et configuré pour communiquer sans fil avec ledit ensemble d'au moins une plaque individualisable (50) et avec ledit serveur distant (70),
et pour au moins une plaque individualisable (50) dudit ensemble,
- un circuit électronique (52) comprenant une batterie (53), une antenne (54), un module de communication sans fil (55) et une mémoire (56) comprenant un identifiant individuel, ledit circuit électronique (52) étant connecté électriquement avec ledit papier électronique (51).

7. Système la revendication 6, comprenant une table de correspondance enregistrée dans une mémoire (56) accessible audit serveur distant (70), et comprenant :
- une correspondance entre un identifiant individuel de plaque individualisable (50) et au moins l'une des informations parmi :
- un identifiant alphanumérique correspondant à un occupant, et
- le patronyme d'un occupant.

8. Système selon la revendication 7, dans lequel :
- le serveur distant (70) est configuré pour pouvoir envoyer vers le modem (60) une instruction de modification d'affichage (80) comprenant un contenu informatif modifié extrait de ladite table de correspondance ; optionnellement par téléphonie mobile sur une carte de communication GSM dudit modem (60),
- le modem (60) est configuré pour renvoyer vers l'ensemble de plaques individualisables ladite instruction de modification d'affichage (80) ; et
- chaque plaque individualisable (50) est configurée pour modifier le contenu de l'affichage du papier électronique (51) correspondant et afficher au moins l'une des informations parmi :
- un identifiant alphanumérique correspondant à un occupant, et
- le patronyme d'un occupant lorsque l'identifiant individuel de ladite plaque est compris dans ladite instruction de modification d'affichage (80).

9. Système selon l'une quelconque des revendications 6 à 8, dans lequel :
- un ensemble d'au moins un support pour plaque individualisable (50) est disposé sur un ensemble d'au moins une boite aux lettres (20) respective ; et/ou
- un ensemble d'au moins un support pour plaque individualisable (50) est disposé sur un ensemble d'au moins une porte d'entrée respective ; et/ou
- un ensemble d'au moins une plaque individualisable (50) est disposé sous forme de tableau d'affichage dans un lieu accessible à l'ensemble des occupants du bâtiment d'habitation (10).

10. Système selon l'une quelconque des revendications 6 à 9, dans lequel chaque plaque individualisable (50) comprend des moyens d'activation sélective de son circuit électronique (52).
